# EUROPÄISCHE PATENTANMELDUNG

(11) **EP 2 439 314 A2**
(43) Veröffentlichungstag der Anmeldung: **11.04.2012**
(21) Anmeldenummer: 11183793.6
(22) Anmeldetag: 04.10.2011
(51) Int. Cl.: C25B 11/03, H01M 4/88

(54) **Verfahren zur Herstellung von transport- und lagerstabilen Sauerstoffverzehrelektroden**

(30) Priorität: 05.10.2010 DE 102010042004
(71) Anmelder: Bayer MaterialScience AG, 51368 Leverkusen (DE)
(72) Erfinder: Bulan, Andreas, 40764 Langenfeld (DE); Weber, Rainer, 51519 Odenthal (DE); Weis, Matthias, 51379 Leverkusen (DE)

(57) **Zusammenfassung**

Es wird ein Herstellverfahren für Sauerstoffverzehrelektroden beschrieben, insbesondere für den Einsatz in der Chloralkali-Elektrolyse, welche vor Gebrauch separat in einem elektrochemisch reduziert werden und die sich durch eine gute Transport- und Lagerfähigkeit auszeichnen. Die Erfindung betrifft ferner die Verwendung dieser Elektroden in der Chloralkali-Elektrolyse oder Brennstoffzellentechnik oder bei Metall/Luft Batterien.

## Beschreibung

Die Erfindung betrifft die Herstellung von Sauerstoffverzehrelektroden, insbesondere für den Einsatz in der Chloralkali-Elektrolyse, welche in einem separaten Herstellschritt in einem wässrigen Elektrolyten mit einem pH-Wert < 8 elektrochemisch reduziert werden und die sich durch eine gute Transport- und Lagerfähigkeit auszeichnen. Die Erfindung betrifft ferner die Verwendung dieser Elektroden in der Chloralkali-Elektrolyse oder Brennstoffzellentechnik.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zu Herstellung und Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzen. Anode und Kathode sind hierbei durch eine Ionenaustauschermembran getrennt. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im Folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, da die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Eine Sauerstoffverzehrelektrode besteht typischerweise aus einem Trägerelement, zum Beispiel einer Platte aus porösem Metall oder Gewebe aus Metalldrähten, und einer elektrochemisch aktiven Beschichtung. Die elektrochemisch aktive Beschichtung ist mikroporös und besteht aus hydrophilen und hydrophoben Bestandteilen. Die hydrophoben Bestandteile erschweren das Eindingen von Elektrolyten und halten somit die entsprechenden Poren für den Transport des Sauerstoffs zu den katalytisch aktiven Zentren frei. Die hydrophilen Bestandteile ermöglichen das Eindringen des Elektrolyten zu den katalytisch aktiven Zentren und den Abtransport der Hydroxid-Ionen. Als hydrophobe Komponente wird in der Regel ein fluorhaltiges Polymer wie Polytetrafluorethylen (PTFE) eingesetzt, welches zudem als polymerer Binder des Katalysators dient. Bei Elektroden mit Silber-Katalysator dient das Silber als hydrophile Komponente.

Als Katalysator für die Reduktion von Sauerstoff sind eine Vielzahl von Verbindungen beschrieben.

So liegen Berichte über den Einsatz von Palladium, Ruthenium, Gold, Nickel, Oxiden und Sulfiden von Übergangsmetallen, Metall-Porphyrinen und Phthalocyaninen, und Pervoskiten als Katalysator für Sauerstoffverzehrelektroden vor.

Praktische Bedeutung als Katalysator für die Reduktion von Sauerstoff in alkalischen Lösungen haben jedoch nur Platin und Silber erlangt.

Platin besitzt eine sehr hohe katalytische Aktivität für die Reduktion von Sauerstoff. Wegen der hohen Kosten von Platin wird dieses ausschließlich in geträgerter Form eingesetzt. Bevorzugtes Trägermaterial ist Kohlenstoff. Kohlenstoff leitet elektrischen Strom zu dem Platin-Katalysator. Die Poren in den Kohlenstoff-Partikeln lassen sich durch Oxidation der Oberflächen hydrophil einstellen und werden hierdurch geeignet für den Transport von Wasser. SVE mit kohlenstoffgeträgerten Platin-Katalysatoren zeigen eine gute Leistung. Die Beständigkeit kohlenstoffgeträgerter Platinelektroden im Dauerbetrieb ist jedoch unzureichend, vermutlich, weil durch Platin auch die Oxidation des Trägermaterials katalysiert wird. Kohlenstoff begünstigt zudem die unerwünschte Bildung von H₂O₂.

Silber hat ebenfalls eine hohe katalytische Aktivität für die Reduktion von Sauerstoff.

Silber kann in kohlenstoffgeträgerter Form und auch als feinteiliges metallisches Silber eingesetzt werden.

SVE mit kohlenstoffgeträgertem Silber weisen üblicherweise Silber-Konzentrationen von 20 ― 50 g/m² auf. Obwohl die kohlenstoffgeträgerten Silberkatalysatoren haltbarer sind als die entsprechenden Platin-Katalysatoren, ist die Langzeitstabilität unter den Bedingungen der Chlor-Alkali-Elektrolyse beschränkt.

Bevorzugt wird ungeträgertes Silber als Katalysator eingesetzt. Bei SVE mit Katalysatoren aus ungeträgertem metallischem Silber treten naturgemäß keine Stabilitätsprobleme durch Zersetzung des Katalysatorträgers auf.

Bei der Herstellung von SVE mit ungeträgerten Silber-Katalysator wird das Silber bevorzugt zumindest teilweise in Form von Silberoxiden eingebracht werden, welche dann zu metallischem Silber reduziert werden. Bei der Reduktion der Silberverbindungen kommt es auch zu einer Änderung in der Anordnung der Kristallite, insbesondere auch zu einer Brückenbildung zwischen einzelnen Silberpartikeln. Dies führt insgesamt zu einer Verfestigung der Struktur

Bei der Fertigung von Sauerstoffverzehrelektroden mit Silber-Katalysator kann man prinzipiell zwischen trockenen und nassen Fertigungsverfahren unterscheiden.

Bei den trockenen Verfahren wird ein Gemisch aus Katalysator und polymerer Komponente (meistens PTFE) zu feinen Partikeln gemahlen, welche anschließend auf ein elektrisch leitendes Trägerelement verteilt und bei Raumtemperatur verpresst werden. Ein solches Verfahren ist beispielsweise in EP 1728896 A2 beschrieben.

Bei den nassen Fertigungsverfahren wird entweder eine Paste oder eine Suspension bestehend aus Katalysator und polymerer Komponente in Wasser oder einer anderen Flüssigkeit verwendet. Bei der Herstellung der Suspension können oberflächenaktive Substanzen zugegeben werden, um deren Stabilität zu erhöhen. Eine Paste wird anschließend über Siebdruck oder Kalandrieren auf den Träger aufgebracht, während die weniger viskose Suspension üblicherweise aufgesprüht wird. Der Träger mit der aufgebrachten Paste bzw. Suspension wird getrocknet und gesintert. Die Sinterung erfolgt bei Temperaturen im Bereich des Schmelzpunktes des Polymers. Weiterhin kann eine Verdichtung der SVK nach dem Sintern auch bei höherer Temperatur (bis zum Schmelzpunkt, Erweichungs- oder Zersetzungspunkt des Polymers) als Raumtemperatur erfolgen.

Die nach diesen Verfahren hergestellten Elektroden werden ohne vorherige Reduktion der Silberoxide in den Elektrolyseur eingebaut. Die Reduktion der Silberoxide zu metallischem Silber erfolgt nach Befüllen des Elektrolyseurs mit den Elektrolyten unter Einwirkung des Elektrolysestroms.

Nun hat sich gezeigt, dass die nach dem Stand der Technik hergestellten SVEs bei der Handhabung eine Reihe von Nachteilen aufweisen. So ist die Katalysatorschicht mechanisch nicht sehr stabil wodurch es leicht zu Beschädigungen wie dem Abplatzen von Teilen der nicht reduzierten Katalysatorschicht kommen kann. Insbesondere beim Einbau der SVE in den Elektrolyseur muss die SVE geknickt werden. Die hierbei entstehenden Beschädigungen führen im Betrieb zu Undichtigkeiten, so dass Elektrolyt durch die SVE in den Gasraum gelangen kann.

Elektroden für industrielle Anlagen werden häufig in zentralen Fertigungsstellen hergestellt und von dort an die einzelnen Einsatzorte transportiert. Hierdurch werden an die Transport- und Lagerfähigkeit besondere Anforderungen gestellt. Die SVE müssen unempfindlich sein gegen Beanspruchungen während des Transports und beim Einbau vor Ort.

Die edelmetalloxidhaltige Elektroden werden in der Regel nicht unmittelbar nach der Fertigung in den Elektrolyseur einbebaut und in Betrieb genommen. So können größere Zeiträume zwischen Fertigung und Einbau als auch zwischen Einbau und Inbetriebnahme vergehen.

Ist die SVK in den Elektrolyseur eingebaut und steht längere Zeit, so kann eine Leistungsverschlechterung auftreten. Im Elektrolyseur befindet sich die Ionenaustauschermembran, die feucht gehalten werden muss. Somit ist die eingebaute SVK immer einer hohen Umgebungsfeuchtigkeit ausgesetzt, die auf die Edelmetalloxide einen negativen Einfluss hat. Beginnende Hydrolyseprozesse verändern die Kornoberflächen und damit die nach der Reduktion vorliegende elektrochemisch aktive Oberfläche. Diese Veränderung wirkt sich beispielsweise negativ auf die Elektrolysespannung aus.

Die Aktivität der SVE wird unter anderem von den Bedingungen beeinflusst, unter denen das Silberoxid zu metallischem Silber reduziert wird. Bei einer industriellen Anlage für die Herstellung von Chlor und Natronlauge kann nicht sichergestellt werden, dass beim Anfahren einer nicht reduzierten SVE die für die Reduktion optimalen Bedingungen eingehalten werden.

Methoden zur Reduktion von Silberoxiden in Sauerstoffverzehrelektroden sind in DE 3710168 A1 beschrieben. Genannt werden die kathodische Reduktion in Kalilauge, die chemische Reduktion mit Zink, und die elektrochemische Reduktion gegen eine Wasserstoffelektrode. Ebenso erwähnt ist das bereits genannte Verfahren, die nicht reduzierte Elektrode in einen Elektrolyseur einzubauen und die Reduktion zu Beginn der Elektrolyse durchzuführen.

Nun sind die genannten Methoden wenig geeignet für die Herstellung von Sauerstoffverzehrelektroden, welche eine ausreichende mechanische Stabilität und eine hohe Lagerstabilität aufweisen.

Die Reduktion mit Zink oder auch mit anderen Metallen bringt in der Praxis erhebliche Probleme mit sich. Insbesondere sind die Kontamination der Elektrode mit dem jeweiligen Metall bzw. Metalloxid und die Gefahr der Verstopfung der Poren zu nennen.

Die in DE 3710168 A1 ebenfalls genannte Reduktion gegen Wasserstoffelektrode, bei welcher die bandförmige Elektrode gegen eine ebenfalls bandförmige Wasserstoffelektrode durch einen Entladungszelle laufen lässt, ist außerhalb des Laborprinzips schwer zu realisieren und scheidet für ein Verfahren im technischen Maßstab aus.

Bei einer elektrochemischen Reduktion in wässrigen Lösungen von Natriumhydroxid oder Kaliumhydroxid ergeben sich diverse Probleme, wenn die Elektrode nach der Reduktion nicht umgehend eingesetzt wird.

Eine Schädigung der Elektrode kann sich beispielsweise aus der Bildung von Alkalicarbonaten aus dem Alkalihydroxid und in Luft vorhandenem Kohlendioxid ergeben. Das Alkalicarbonat kann dabei die Poren der SVE verstopfen, wodurch diese gänzlich unbrauchbar werden kann bzw. die Elektrolyse bei deutlich höherer Spannungen betrieben werden muss.

Des Weiteren kann sich die verbleibende Alkalilauge durch Verdunsten von Wasser während der Lagerung aufkonzentrieren. Hierbei kann das Alkalihydroxid auskristallisieren und dadurch die Poren der SVE verstopfen bzw. durch die sich bildenden Kristalle die Poren irreversibel zerstören. Zur Vermeidung der genannten Probleme müsste die Alkalilauge nach der Reduktion aus der Elektrode vollständig entfernt werden. Dies ist bei aus einer feinporösen Elektrode nur schwer durchführbar. Da die reduzierte SVE immer Spuren von Alkalilauge enthält, wird der Einbau der SVE in den Elektrolyseur durch erhöhte Sicherheitsmaßnahmen erschwert (Vermeidung von Verätzungen durch Alkalilauge).

Es lässt sich somit feststellen, dass eine Reduktion in alkalischer Lösung wenig geeignet ist für Herstellung von Sauerstoffverzehrelektroden, sofern diese im Anschluss über einen längeren Zeitraum transportiert und/oder gelagert werden sollen.

Die Aufgabe der vorliegenden Erfindung besteht darin, eine funktionsfertige Sauerstoffverzehrelektrode, insbesondere für den Einsatz in der Chloralkali-Elektrolyse, bereitzustellen, die transport- und lagerstabil ist und auch vor Inbetriebnahme in einen feucht gehaltenen Elektrolyseur eingebaut werden kann, ohne dass sich die Aktivität und Lebenszeit der Elektrode verringern.

Die spezielle Aufgabe der vorliegenden Erfindung besteht darin eine Verfahren zu finden, mit welchem die Sauerstoffverzehrelektroden in der Weise vorbereitet werden, dass zum einen eine langzeitstabile, leistungsfähige Silberkatalysatorschicht entsteht und zum anderen die reduzierten Elektroden unempfindlich gegen Schädigungen bei Transport, Lagerung, mechanisch ausreichend stabil für den Einbau in den Elektrolyseur und gegen Feuchtigkeit sind.

Die Aufgabe wird beispielsweise dadurch gelöst, dass bei der Fertigung der SVE nach Auftragen und Verfestigen der katalytisch wirksamen Schicht auf den Träger (nachfolgend Vorprodukt genannt) die hierin enthaltenen Silberoxide in einem gesonderten Schritt in einem wässrigen Elektrolyten mit einem pH < 8 elektrochemisch reduziert werden.

Gegenstand der Erfindung ist ein Verfahren zur Herstellung einer transport-, lagerstabilen und mechanisch stabilen flächigen Sauerstoffverzehrelektrode, mindestens aufweisend einen Träger, der insbesondere elektrisch leitend ist, die ferner eine Gasdiffusionsschicht und eine einen auf Silber basierenden Katalysator enthaltende Schicht umfasst, dadurch gekennzeichnet, dass nach der Beschichtung des Trägers mit einem silberoxidhaltigen Vorprodukt das silberoxidhaltige Vorprodukt in einem wässrigen Elektrolyten bei einem pH Wert von < 8 elektrochemisch reduziert wird.

Das silberoxidhaltige Vorprodukt umfasst insbesondere wenigstens Silberoxid und ein feinteiliges, insbesondere hydrophobes Material, bevorzugt PTFE-Pulver.

Die Reduktion kann in einer Zelle bestehend aus einer Anode, einem Elektrolyten und einer Vorrichtung zur Aufnahme und Ladungszuführung für die kathodisch zu schaltende SVE erfolgen. Hierbei können aus der Galvanotechnik bekannten Techniken eingesetzt werden.

Anode und SVE können in eine Kammer ohne Trennung eintauchen. Da sich im Verlauf der elektrochemischen Reduktion an der SVE Wasserstoff entwickeln kann, welche mit dem an der Anode entstehenden Sauerstoff ein explosives Gemisch bilden würde, ist es vorteilhaft, Anode und Kathode zu trennen. Dies kann zum Beispiel durch ein Diaphragma oder eine Membran geschehen. Die in den jeweiligen Gasraum gelangenden Gase werden dann getrennt abgeführt. Die Gefährdung durch Wasserstoff kann aber auf andere, dem Fachmann bekannte Weise vorgebeugt werden, zum Beispiel durch Spülen mit einem Inertgas.

Die Gestaltung der Anode erfolgt in dem Fachmann bekannter Weise. Form und Anordnung sind bevorzugt so zu wählen, dass die Stromdichte an der Kathode gleichmäßig verteilt ist. Die Anode kann an der Oberfläche mit weiteren Materialien wie Iridiumoxid beschichtet werden, welche die Überspannung des Sauerstoffs herabsetzten. Als Elektrolyt für die Durchführung der Reduktion können wässrige insbesondere Lösungen der Sulfate oder Nitrate der Alkali- und Erdalkalimetalle oder von Silber verwendet werden.

Bevorzugt weist daher der Elektrolyt Ionen eines Elementes aus der Alkali- oder Erdalkaligruppe oder von Silber, besonders bevorzugt von Silber auf.

Für Elektroden, welche später für die Elektrolyse von Natriumchlorid verwendet werden sollen, bietet sich eine wässrige Lösung von Natriumsulfat als Elektrolyt an; der Einsatz eines Natriumsalzes verhindert, dass die später zu produzierende Natronlauge durch den Eintrag weiterer Kationnen kontaminiert werden kann. Entsprechend bietet sich Kaliumsulfat an bei Elektroden für die Kaliumchlorid-Elektrolyse.

Es lassen sich aber auch andere Salze der Alkali- und Erdalkalimetalle wie zum Beispiel Nitrate einsetzen.

Chloride sind als Elektrolyten nicht geeignet. Es besteht die Gefahr, dass sich in der Elektrode Silberchlorid bildet, welches sich wiederum erheblich schwieriger als Silberoxid reduzieren lässt. So ist insbesondere darauf zu achten, dass im Elektrolyten wenig oder keine Chloridionen vorhanden sind. Der Chloridgehalt im Elektrolyt sollte insbesondere bei höchstens 1.000 ppm, bevorzugt bei höchstens 100 ppm, ganz besonders bevorzugt 20 ppm Chlorid liegen.

Der pH-Wert des Elektrolyten ist bevorzugt so zu wählen, dass sich keine unlöslichen Silberhydroxide bilden können. Dies ist bei einem pH < 8 der Fall. Besonders bevorzugt wird in einem pH-Bereich von 3 bis 8, bevorzugt bei einem pH-Wert von 4 bis 7 reduziert.

Bevorzugte Elektrolyte sind Lösungen von in Wasser löslichen Silbersalzen, wie Silbernitrat, Silberacetat, Silberfluorid, Silberpropionat, Silberlactat und Silbersulfat, besonders bevorzugt ist Silbersulfat und Silbernitrat. Komplexe Silbercyanide wie Natriumcyanoargentat oder Kaliumcyanoargentat, Silbermolybdat, sowie Salze der Pyrophosphorsäure, Perchlorsäure und Chlorsäure können ebenfalls als Elektrolyte eingesetzt werden.

Nach der Reduktion in der Elektrode verbleibende Silbersalze haben keinen störenden Einfluss. Dem Elektrolyten können weitere Substanzen zugegeben werden, um die Durchführung der Reduktion zu verbessern. So empfiehlt es sich, beispielsweise beim Einsatz von Silbersulfat die Lösung mit Schwefelsäure oder Salpetersäure anzusäuern, um ein Ausfallen von Silberoxid zu vermeiden. Zur Regulierung des pH-Wertes können aber auch Puffersubstanzen wie z.B. Natriumacetat zugegeben werden.

Es stehen eine Vielzahl weitere Zusätze zur Verfügung, wie sie zum Beispiel aus der Galvanik grundsätzlich bekannt sind. Der Fachmann wird jeweils entscheiden, ob und welche weiteren bekannten Zusätze er in Hinblick auf eine bessere elektrochemisch Reduktion, aber auch bezüglich der Lagerstabilität der Elektrode und auch Vermeidung späterer Produktkontaminationen zur Hilfe nimmt.

Auch können Kombinationen mehrere Salze als Elektrolyten eingesetzt werden. So kann zum Beispiel ein Gemisch aus Silbersulfat und Natriumsulfat in Wasser oder auch Mischungen von Natriumnitrat und Natriumsulfat eingesetzt werden.

Die Konzentration der Elektrolyten bewegt sich in den dem Fachmann aus der Galvanik bekannten Bereichen. Die Konzentration kann in einem breiten Bereich insbesondere von mindestens 0,01 Mol/l bevorzugt von 0,01 Mol/l bis 2 Mol/l gewählt werden, wobei die Konzentration auch durch die Löslichkeit des Elektrolyten vorgegeben sein kann. Bevorzugt wird eine möglichst hohe Konzentration des Elektrolyten gewählt, um dem Spannungsabfall über den Elektrolyten und damit die Elektrolysespannung zu minimieren.

Bei Trennung von Anoden- und Kathodenraum durch eine Membran besteht die Möglichkeit, auf Seiten der Anode und der Kathode jeweils unterschiedliche Elektrolyten einzusetzen. Auf der Kathodenseite bleiben die Anforderungen an den Elektrolyten die gleichen, als wenn ohne Trennung von Anoden- und Kathodenraum gefahren wird. Auf der Anodenseite lassen sich jedoch Elektrolyten einsetzen, die unabhängig von den Anforderungen an den Elektrolyt auf der Kathodenseite sind. So kann auf der Anodenseite eine Alkalihydroxid-Lösung als Elektrolyt eingesetzt werden, durch die Erhöhung der Hydroxidionen-Konzentration ergibt sich eine Verringerung des Spannungsabfalls über den Elektrolyten auf der Anodenseite.

Zur Konditionierung des Elektrolyten können die aus der Galvanik bekannten Techniken angewandt werden, zum Beispiel Umpumpen, Kühlen, Filtrieren.

Die zu reduzierende SVE wird bevorzugt so in die Apparatur eingebracht, dass ein gleichmäßiger Stromfluss über die gesamte Elektrodenfläche erfolgt und eine gleichmäßige Reduktion über die gesamte Fläche stattfinden kann. Entsprechende Techniken sind dem Fachmann bekannt. Bei unterschiedlicher Beschichtung auf der Vorder- und Rückseite des elektrisch leitenden Trägerelements erfolgt die Anordnung bevorzugt so, dass die Seite mit dem höheren Gehalt an Silberoxid der Anode zugewandt ist.

Es empfiehlt sich insbesondere, die SVE vor Einbringung in die Reduktionsapparatur durch Einlegen in Wasser oder bevorzugt in einen Elektrolyten zu konditionieren. Die Konditionierung kann über mehrere Stunden, bevorzugt 0,1 - 8 h erfolgen und hat das Ziel, die hydrophilen Poren möglichst vollständig zu füllen.

Für die Stromzufuhr zur der zu reduzierenden SVE gibt es verschiedene Möglichkeiten. So kann die Stromzufuhr über das Trägerelement erfolgen, zum Beispiel in der Weise, dass das Trägerelement am Rande nicht beschichtet wird und die Stromzufuhr über eine Klemme oder andere Verbindung über das Trägerelement erfolgt.

Die Stromzufuhr kann aber auch über ein flächig auf der SVE aufliegendes Bauteil erfolgen, zum Beispiel einem Streckmetall oder einem Metallgewebe oder Gewirk. Die Stromübertragung erfolgt in einer solchen Anordnung über eine Vielzahl von Kontaktpunkten.

Die Reduktion kann grundsätzlich bei niedriger Stromdichte von etwa 0,1 kA/m² oder auch niedriger erfolgen. Bevorzugt wird aber bei möglichst hoher Stromdichte reduziert. So sind Stromdichten > 1 kA/m² bevorzugt. Da der apparative Aufwand mit steigender Stromdichte steigt, dürfte die praktikable Obergrenze bei 5 kA/m² liegen, wobei grundsätzlich, sofern die technischen Voraussetzungen gegeben sind, auch bei höheren Stromstärken bis 10 kA/m² und höher reduziert werden kann. Ein bevorzugtes Verfahren ist daher dadurch gekennzeichnet, dass die Reduktion bei einer Stromdichte von 0,1 bis 10 kA/m² erfolgt.

Die zeitliche Dauer der Reduktion richtet sich nach dem gewünschten Reduktionsgrad, der Stromdichte, der Beladung der Elektrode mit Silberoxid und den Verlusten durch Nebenreaktionen.

In der Regel reicht es in einer bevorzugten Ausführung des Verfahrens, wenn etwa 50 % des Silberoxids zu metallischem Silber reduziert werden, um eine für den Transport ausreichend feste SVE zu erhalten. Um Probleme zum Beispiel durch Veränderung des verbleibenden Silberoxids durch Feuchtigkeit auszuschließen, wird besonders bevorzugt eine Reduktion von über 90 %, ganz besonders bevorzugt eine vollständige Reduktion angestrebt.

Bekanntlich werden für die Reduktion von 1,118 g einwertigen Silberionen 1000 Coulomb (entsprechend 1.000 Ampere x Sekunde) benötigt, bei zweiwertigen Silber wird entsprechend die doppelte Ladung benötigt. Bei einer Beladung mit 1.150 g Silber (I)-Oxid pro m² werden theoretisch für eine vollständige Reduktion 266 Ah benötigt. Aufgrund von Nebenreaktionen wird die tatsächliche benötigte Ladungsmenge höher sein.

Die zeitliche Dauer der Reduktion kann über die Elektrolysespannung gesteuert werden.

Die Reduktion erfolgt in einem Temperaturbereich von 10°C bis 95°C, bevorzugt in einem Bereich von 15°C bis 50°C, besonders bevorzugt in einem Bereich von 20°C bis 35°C.

Während der Reduktion erwärmt sich der Elektrolyt. Die entstehende Wärme kann durch entsprechende Kühlung abgeführt werden, die Reduktion kann aber auch adiabatisch mit steigenden Badtemperaturen erfolgen.

In einer bevorzugten Ausführung des neuen Verfahrens wird die Gasdiffusionsschicht und die Katalysator enthaltene Schicht durch eine einzige Schicht gebildet. Dies wird beispielsweise dadurch erreicht, dass die die Gasdiffusionsschicht und die Katalysator enthaltene einzelne Schicht durch Verwendung eines Gemisches aus Silberoxid enthaltendem Pulver und hydrophobem Pulver, insbesondere PTFE Pulver, geformt und reduziert wird.

In einer bevorzugten Variante des neuen Verfahrens wird die Gasdiffusionsschicht und die Katalysator enthaltene Schicht durch mindestens zwei unterschiedliche Schichten gebildet. Dies wird beispielsweise dadurch erreicht, dass die Gasdiffusionsschicht und die Katalysator enthaltene Schichten durch Verwendung mindestens zweier unterschiedlicher Gemische aus Silberoxid enthaltendem Pulver und hydrophobem Pulver, insbesondere PTFE Pulver, mit unterschiedlichem Gehalt an Silberoxid in zwei oder mehr Schichten geformt und dann reduziert wird.

Die Fertigung einer SVE nach dem erfindungsgemäßen Verfahren soll im Folgenden näher erläutert werden, ohne die Gültigkeit der Erfindung auf die im Folgenden aufgeführten speziellen Ausführungsformen zu beschränken.

Die Herstellung des silberoxidhaltigen Vorprodukts erfolgt z. B. mit den an sich bekannten Techniken im Nass- oder Trockenherstellungsverfahren. Diese erfolgen insbesondere wie weiter oben beschrieben.

Beispielsweise wird die im Nassherstellungsverfahren eingesetzte wässrige Suspension oder Paste aus Silberoxid, gegebenenfalls zusätzlich feinteiligem Silber, einem fluorhaltigen Polymer wie zum Beispiel PTFE und gegebenenfalls einem Verdicker (zum Beispiel Methylcellulose) und einem Emulgator durch Mischen der Komponenten mit einem hochtourigen Mischer hergestellt. Hierzu wird zuerst aus Silberoxid, gegebenenfalls feinteiligem Silber, dem Verdicker (zum Beispiel Methylcellulose) und dem Emulgator eine Suspension in Wasser und/oder Alkohol hergestellt. Diese Suspension wird dann mit einer Suspension eines fluorhaltigen Polymers, wie sie zum Beispiel unter der Bezeichnung Dyneon™ TF5035R im Handel erhältlich ist, vermischt. Die so erhaltene Emulsion oder Paste wird dann nach bekannten Verfahren auf einen Träger aufgebracht, getrocknet und gesintert. Um bei der nachfolgenden Reduktion die Stromzufuhr über direkten Kontakt zu dem Trägerelement zu ermöglichen, kann der Rand des Trägerelements von der Beschichtung freigehalten werden.

Alternativ wird im bevorzugten Trockenherstellungsverfahren eine Pulvermischung durch Mischung eines Gemischs aus PTFE oder einem anderen fluorhaltigen Polymer, Silberoxid und gegebenenfalls Silberpartikeln in einem hochtourigen Mischer hergestellt. Bei den Mahlvorgängen ist jeweils darauf zu achten, dass die Temperatur der Mischung in einem Bereich von 35 bis 80°C, besonders bevorzugt von 40 bis 55°C gehalten wird.

Die Pulvermischung wird dann in bekannter Weise auf einen Träger aufgebracht und verdichtet. Um bei der nachfolgenden Reduktion die Stromzufuhr über direkten Kontakt zu dem Trägerelement zu ermöglichen, kann der Rand des Trägerelements von der Beschichtung freigehalten werden.

Das nach dem Nass- oder Trockenverfahren hergestellte silberoxidhaltige Vorprodukt wird nach der Beschichtung und Verdichtung bzw. Sinterung in einem Bad mit Wasser oder einem Elektrolyt bis zu mehreren Stunden konditioniert.

Die konditionierte Elektrode wird dann in eine Apparatur zur elektrochemischen Reduktion überführt.

Als Elektrolyt dient bevorzugt eine Silbersulfat-Lösung. Alternativ können andere oben beschriebene Elektrolytzusätze wie Silbernitrat, Silberacetat oder Silberpropionat eingesetzt werden. Ebenso geeignet sind Sulfate und andere Salze der Alkali- und Erdalkalimetalle, ausgenommen deren Chloride und Salze anderer Anionen, die mit Silber schwer lösliche Salze oder explosive, leicht zersetzliche Verbindungen bilden. Der pH-Wert kann mittels Schwefelsäure oder einer Pufferlösung auf einen Bereich < 8, bevorzugt 3 bis 8 eingestellt werden. Der Chloridgehalt des Elektrolyten soll bevorzugt bei höchstens 1.000 ppm, besonders bevorzugt bei höchstens 100 ppm, ganz besonders bevorzugt höchstens 20 ppm Chlorid liegen.

Als Anode bei der Reduktion wird bevorzugt eine Sauerstoff entwickelnde Elektrode gewählt. Dies kann zum Beispiel ein mit Platin überzogenes Nickelblech oder ein mit Iridiumoxid beschichtetes Titanblech sein. Es können aber auch Anoden aus anderen, sich nicht auflösende Werkstoffen eingesetzt werden, oder Silber als lösliche Anode.

Die Fläche der Anode sollte möglichst gleich groß wie die Fläche der zur reduzierenden SVE sein.

Die Stromzufuhr kann über eine Klemme oder eine andere Verbindung am unbeschichteten Rand des Trägerelements der SVE erfolgen. Die Stromzufuhr kann aber auch über ein flächig auf der SVE aufliegendes Bauteil erfolgen, zum Beispiel einem Streckmetall oder einem Metallgewebe oder Gewirk. Dies ist zum Beispiel erforderlich, wenn das Trägerelement einschließlich des Randbereiches ganzflächig beschichtet wurde.

Für die Reduktion wird bevorzugt eine Stromdichte > 1 kA/m² gewählt. Die Elektrolysespannung ergibt sich nach der Anordnung der Elektroden / Diaphragmen oder Ionenaustauschern in der Elektrolysezelle und der Art des Elektrolyten. Im Anschluss wird die SVE der Elektrolysezelle entnommen. Anhaftenden Elektrolyt lässt man ablaufen, das Ablaufen des Katholyten kann durch weitere, dem Fachmann an sich bekannte Techniken wie zum Beispiel Anblasen mit Luft unterstützt werden. Die SVE wird sodann mit deionisiertem Wasser gespült, zum Beispiel durch Abspritzen oder Eintauchen in ein Bad mit deionisiertem Wasser. Die SVE wird im Anschluss wasserdicht verpackt

Die Konsistenz der SVE hat sich durch die Reduktion deutlich verfestigt. Die SVE ist unempfindlich gegen mechanische Schädigungen und kann problemlos transportiert und beispielsweise in eine Chlor-Alkali-Elektrolysezelle eingebaut werden. Die SVE behält ihre Aktivität auch bei längerer Lagerung in feuchter Atmosphäre.

Die nach dem erfindungsgemäßen Verfahren hergestellte Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die nach dem erfindungsgemäßen Verfahren hergestellte Sauerstoffverzehrelektrode bevorzugt als Kathode in einer Brennstoffzelle geschaltet werden. Bevorzugte Beispiele für solche Brennstoffzellen sind die alkalische Brennstoffzellen.

Weiterer Gegenstand der Erfindung ist daher die Verwendung der nach dem erfindungsgemäßen Verfahren hergestellte Sauerstoffverzehrelektrode zur Reduktion von Sauerstoff im Alkalischen, insbesondere als Sauerstoff verzehrende Kathode in der Elektrolyse, insbesondere in der Chloralkalielektrolyse, oder als Elektrode in einer Brennstoffzelle oder als Elektrode in einer Metall/Luft-Batterie.

Die neue nach dem erfindungsgemäßen Verfahren hergestellte SVE wird besonders bevorzugt bei der Chlor-Alkali-Elektrolyse und hier insbesondere bei der Natriumchlorid-(NaCl)-Elektrolyse eingesetzt.

Die Erfindung wird nachfolgend durch die Beispiele, welche jedoch keine Beschränkung der Erfindung darstellen, näher erläutert.

### Beispiel

3,5 kg einer Pulvermischung, bestehend aus 7 Gew.-% PTFE-Pulver, 88 Gew.-% Silber-I-Oxid und 5 Gew.-% Silberpulver des Typs 331 der Fa. Ferro, wurden in einem Mischer der Fa. Eirich, Typ R02, ausgerüstet mit einem Sternwirbler als Mischelement, bei einer Drehzahl von 6000 U/min so gemischt, dass die Temperatur der Pulvermischung 55°C nicht übersteigt. Dies wurde dadurch erreicht, dass der Mischvorgang unterbrochen und die Mischung abgekühlt wurde. Insgesamt wurde das Mischen sechsmal durchgeführt. Nach dem Mischen wurde die Pulvermischung mit einem Sieb, welches eine Maschenweite von 1,0 mm aufwies, gesiebt.

Die gesiebte Pulvermischung wurde anschließend auf ein Netz aus Nickel mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,5 kN/cm verpresst. Der Walzenpresse wurde die SVE entnommen.

Anschließend wurde die SVE in eine Kathodenkammer eingebaut, die als Elektrolyt eine mit Schwefelsäure angesäuerte Silbersulfatlösung (8 g Ag₂SO₄ pro Liter, pH 3) enthielt, Die elektrische Kontaktierung der SVE erfolgte über ein flächig aufliegendes Streckmetall mit einer Maschenweite von 6 mm. Die Kathodenkammer war durch eine Ionenaustauschermembran DuPont Nafion N 234 von der Anodenkammer getrennt. Die Anodenkammer war mit 32 Gew.-%iger NaOH gefüllt, als Anode diente eine 1,5 mm starkes, mit Platin beschichtetes Nickelblech.

Die SVE wurde vor Einbau im Elektrolyten 2 h bei Raumtemperatur konditioniert.

Die SVE wurde mit einer Stromstärke von 1 kA/m² über 40 Minuten reduziert.

Die SVE wurde dem Bad entnommen. Nach Ablaufen der anhaftenden Elektrolyten wurde die Elektrode in ein Bad mit deionisiertem Wasser eingetaucht und nach Abtropfen des anhaftenden Wassers erhält man eine stabile, für den Versand geeignete Elektrode.

Die SVE wurde bei der Elektrolyse einer Natriumchlorid-Lösung in einem Elektrolyseur mit einer Ionenaustauschermembran von DuPONT N982WX und einem Natronlaugespalt zwischen SVE und Membran von 3mm eingesetzt. Die Elektrolysespannung betrug 2,02V bei einer Stromdichte von 4 kA/m², einer Elektrolyttemperatur von 90°C und einer Natronlauge-Konzentration von 32 Gew.-%. Als Anode wurde eine handelübliche edelmetallbeschichtete Titanelektrode mit einem Coating der Fa. DENORA bei einer NaCl-Konzentration von 200g/l eingesetzt.

## Patentansprüche

1. Verfahren zur Herstellung einer transport- und lagerstabilen flächigen Sauerstoffverzehrelektrode, mindestens aufweisend einen Träger, der insbesondere elektrisch leitend ist, die ferner eine Gasdiffusionsschicht und eine einen auf Silber basierenden Katalysator enthaltende Schicht umfasst, **dadurch gekennzeichnet, dass** nach der Beschichtung des Trägers mit einem silberoxidhaltigen Vorprodukt das silberoxidhaltige Vorprodukt in einem wässrigen Elektrolyten bei einem pH Wert von 8 wenigstens teilweise elektrochemisch reduziert wird.

2. Verfahren nach Anspruch 1, **dadurch gekennzeichnet, dass** der Elektrolyt Ionen eines Elementes aus der Alkali- oder Erdalkaligruppe oder von Silber enthält.

3. Verfahren nach Anspruch 2, **dadurch gekennzeichnet, dass** der Elektrolyt Silber-Ionen enthält.

4. Verfahren nach einem der Ansprüche 1 oder 3, **dadurch gekennzeichnet, dass** der Elektrolyt Sulfat- und/oder Nitrat-Ionen enthält.

5. Verfahren nach einem der Ansprüche 1 bis 4, **dadurch gekennzeichnet, dass** der Elektrolyt höchstens 1.000 ppm Chlorid, bevorzugt höchstens 100 ppm Chlorid, besonders bevorzugt höchstens 20 ppm Chlorid enthält.

6. Verfahren nach einem der Ansprüche 1 bis 5, **dadurch gekennzeichnet, dass** die Reduktion bei einer Stromdichte von 0,1 bis 10 kA/m² erfolgt.

7. Verfahren nach einem der Ansprüche 1 bis 6, **dadurch gekennzeichnet dass** die Reduktion des Silberoxids zu über 50%, bevorzugt über 90%, besonders bevorzugt vollständig erfolgt.

8. Verfahren nach einem der Ansprüche 1 bis 7, **dadurch gekennzeichnet, dass** der Elektrolyt eine Konzentration an Metallkationen von mindestens 0,01 Mol/l, bevorzugt von 0,01 Mol/l bis 2 Mol/l aufweist.

9. Verfahren nach einem der Ansprüche 1 bis 8, **dadurch gekennzeichnet, dass** die elektrochemische Reduktion bei einem pH Wert von 3 bis 8 bevorzugt von 4 bis 7 erfolgt.

10. Verfahren nach einem der Ansprüche 1 bis 9, **dadurch gekennzeichnet, dass** die elektrochemische Reduktion bei einer Temperatur von 10 bis 95 °C, bevorzugt bei 15°C bis 50°C erfolgt.

11. Verfahren nach einem der Ansprüche 1 bis 10, **dadurch gekennzeichnet, dass** die Gasdiffusionsschicht und die Katalysator enthaltene Schicht durch eine einzige Schicht gebildet werden.

12. Verfahren nach einem der Ansprüche 1 bis 10, **dadurch gekennzeichnet, dass** die Gasdiffusionsschicht und die Katalysator enthaltene Schicht durch mindestens zwei unterschiedliche Schichten gebildet werden.

13. Verwendung der nach einem Verfahren gemäß einem der Ansprüche 1 bis 12 gefertigten Sauerstoffverzehrelektrode als Sauerstoff verzehrende Kathode in der Elektrolyse, insbesondere in der Chloralkalielektrolyse, oder als Elektrode in einer Brennstoffzelle oder als Elektrode in einer Metall/Luft-Batterie.

14. Elektrolysevorrichtung, insbesondere für die Chloralkalielektrolyse, aufweisend eine nach einem Verfahren gemäß einem der Ansprüche 1 bis 12 gefertigte Sauerstoffverzehrelektrode als Sauerstoff verzehrende Kathode.
